# EUROPÄISCHE PATENTSCHRIFT

(11) **EP 1 111 289 B1**
(45) Veröffentlichungstag und Bekanntmachung des Hinweises auf die Patenterteilung: **04.05.2005**
(21) Anmeldenummer: 00127618.7
(22) Anmeldetag: 16.12.2000
(51) Int. Cl.: F16L 59/12, E04B 1/76, E04F 13/08

(54) **Wärme- und/oder Schalldämmung für eine ebene Fläche und Verfahren zur Befestigung von Dämmstoffplatten bzw. Dämmstoffplattenabschnitten auf ebenen Flächen**
Heat and/or sound insulation for an even surface and method for the attachment of insulating panels or insulating sections on even surfaces
Isolation thermique et/ou acoustique pour une surface plane et méthode pour la fixation des panneaux isolants ou des sections isolantes sur une surface plane

(30) Priorität: 24.12.1999 DE 19963028
(43) Veröffentlichungstag der Anmeldung: 27.06.2001
(73) Patentinhaber: Deutsche Rockwool Mineralwoll GmbH & Co. OHG, 45966 Gladbeck (DE)
(72) Erfinder: Klose, Gerd-Rüdiger, Dr., 46286 Dorsten (DE)
(74) Vertreter: Wanischeck-Bergmann, Axel

(56) Entgegenhaltungen:
- EP-A- 0 682 163
- DE-A- 4 324 598
- US-A- 5 657 602

## Beschreibung

Die Erfindung betrifft eine Wärme- und/oder Schalldämmung für eine ebene Fläche, insbesondere für eine Gebäudefassade, bestehend aus mehreren Dämmstoffplatten und/oder Dämmstoffplattenabschnitten, die über- und/oder nebeneinander auf der Fläche angeordnet und über Dämmstoffhalter mit der Fläche verbunden sind. Ferner betrifft die Erfindung ein Verfahren zur Befestigung von Dämmstoffplatten bzw. Dämmstoffplattenabschnitten auf ebenen Flächen, insbesondere auf Gebäudefassaden, bei dem einzelne Dämmstoffplatten auf der ebenen Fläche mit Dämmstoffhaltern befestigt werden (siehe, zum Beispiel, des Dokument EP-A- 0 682 163).

Zur Vermeidung von Transmissionswärmeverlusten werden die Außenwände von beheizten Gebäuden mit Dämmschichten versehen. Diese Dämmschichten haben darüber hinaus Einfluß auf das Schalldämmmaß der Außenwand-Konstruktion und beeinflussen darüber hinaus die Feuerwiderstandsfähigkeit der hierbei verwendeten Bauteile. Im Stand der Technik hat es sich als vorteilhaft erwiesen, die Bauteile der Außenwandkonstruktion mit hinterströmten Bekleidungen auszubilden. Diese Bekleidungen bestehen aus platten- oder tafelförmigen Elementen aus den verschiedensten Materialien und sind zumeist derart befestigt, daß sie das Auftreffen von Schlagregen und/oder UV-Strahlung auf die Oberfläche der Dämmschicht verhindern. Es sind aber auch solche Bekleidungen bekannt, die offene Fugen aufweisen, so daß die Oberfläche der Dämmschicht beispielsweise durch Atmosphärilien angegriffen werden kann.

Die Dämmschicht besteht aus einzelnen Dämmplatten, die auf ebenen Flächen der Außenwände des Gebäudes mit Hilfe von sogenannten Dämmstoffhaltern befestigt werden. Diese Dämmstoffhalter sind in der Regel als Spreizdübel ausgebildet, der über einen Schaft mit einem angeformten ringförmigen oder rechtekkigen Teller verbunden ist. Darüber hinaus sind zweiteilige Dämmstoffhalter bekannt, bei denen der Schaft getrennt von dem Halteteller handhabbar ist, um beispielsweise den Schaft mit Haltetellem unterschiedlicher Größe und/oder Form kombinieren zu können. Halteteller und Spreizdübel bestehen insbesondere aus Kunststoff, beispielsweise Polyamid. Bei der Verarbeitung derartiger Dämmstoffhalter wird der Spreizdübel mit Hilfe einer durch den Schaft geführten Schraube gespreizt, die durch Drehen oder Einschlagen in den Schaft eingetrieben wird. Alternativ kann anstelle der Schraube auch ein Stift vorgesehen sein, der die Spreizung des Spreizdübels in einer Gebäudewandöffnung, insbesondere Bohrung bewirkt. Weiterhin sind Dämmstoffhalter bekannt, bei denen der Spreizdübel ringförmige Vorsprünge aufweist und deren Schaft eine solche Stabilität hat, daß der Dämmstoffhalter in das Bohrloch eingeschlagen werden kann und sich in der Gebäudeaußenwand verkrallt.

Als Dämmschicht werden Dämmstoffplatten verwendet, die prinzipiell aus allen geeigneten Dämmstoffen bestehen können. Neben Dämmstoffplatten werden auch Dämmstoffplattenabschnitte verwendet, die insbesondere dann zum Einsatz kommen, wenn der verbleibende, zu dämmende Raum auf der Fläche für die Aufnahme einer gesamten Dämmstoffplatte nicht mehr geeignet ist. Es wird dann ein Dämmstoffplattenabschnitt in der Regel manuell durch Zuschneiden einer Dämmstoffplatte gefertigt, der entsprechend der zu dämmenden Fläche bzw. des zu dämmenden Raumes ausgebildet ist. Bei den Dämmstoffen ist darauf zu achten, daß diese sämtliche baurechtlichen Anforderungen an den Brand-, Wärme- und Schallschutz erfüllen. Aus diesen Gründen dominieren Faserdämmstoffe, d.h. Mineralwolle-Dämmstoffe.

Mineralwolle-Dämmstoffe bestehen aus glasig erstarrten Fasern, die üblicherweise mit ca. 2 bis 8 Masse-% eines Gemisches von Phenol-Formaldehyd-HarnstoffHarzen gebunden werden. Zur durchgehenden Hydrophobierung der Fasermasse werden ca. 0,2 bis 0,4 Masse-% Mineral-, Natur- oder Silikonöle hinzugefügt. Derartige Mineralwolle-Dämmstoffe sind im allgemeinen nicht brennbar und erhöhen den Schallschutz.

Handelsüblich wird zwischen Mineralwolle-Dämmstoffen aus Glaswolle und Steinwolle unterschieden. Geeignete Glaswolle-Dämmstoffe weisen Rohdichten zwischen ca. 12 und 35 kg/m³ auf. Die hieraus hergestellten Dämmstoffplatten zeichnen sich u.a. dadurch aus, daß die für die Dämmung von Außenwänden verwendeten Produkte eine ausgesprochen laminare Struktur aufweisen. Wegen der flachen Lagerung der Einzelfasern quer zu den großen Oberflächen und wegen der niedrigen Rohdichten sind derartige Dämmstoffe leicht kompressibel. Die Steifigkeit der hieraus hergestellten Dämmstoffplatten ist daher gering. Demgegenüber weisen die Dämmstoffplatten aus Glaswolle eine relativ hohe Zugfestigkeit in der Fläche, aber auch eine sehr niedrige Querzugfestigkeit auf. Glaswolle-Dämmstoffe neigen unter dem Einfluß der Atmosphärilien, d.h. während der Montagezeit, in der sie ungeschützt der Witterung ausgesetzt sind, zu einer Expansion in Richtung der Dickenachse. Insbesondere müssen die Oberflächen hinter offenen Bekleidungen angebrachter Glaswolle-Dämmstoffe dauerhaft geschützt werden.

Aufgrund der voranstehend genannten Eigenschaften dieser Dämmstoffe ist der Kraftschluß des Dämmstoffhalters im Normalfall sehr gering. Abhilfe kann hier nur dadurch geschaffen werden, daß der Dämmstoff zuvor stark komprimiert wird, wodurch aber wiederum der Wärmedurchlaßwiderstand sinkt und andererseits sich die Oberflächen des Dämmstoffes aufwölben. Hierbei auftretende Expansion des Dämmstoffes kann eine Größe erreichen, die zu einer vollständigen oder zumindest partiellen Schließung des notwendigen Belüftungsspaltes zwischen der Dämmschicht und der äußeren Bekleidung führt. Hieraus resultiert eine Unterbrechung der Hinterströmung der Bekleidung, wodurch Feuchtansammlungen und in der Folge Schäden an den betroffenen Bauteilen entstehen können. Es ist bei der Konstruktion und der Erstellung derartiger Dämmungen darauf zu achten, daß ein Lüftungsspalt von zumindest 2 cm vollflächig bestehen bleibt.

Die Expansion der Oberflächen der Dämmstoffplatten aus Glaswolle kann dadurch kompensiert werden, daß die Oberfläche derartiger Dämmstoffplatten beispielsweise mit Glasvliesen oder Glasgeweben verklebt sind. Hierbei nimmt die aufgebrachte Schicht aus Glasvlies oder Glasgewebe die beim Eindrücken der Dämmstoffhalter auftretenden Zugkräfte auf, erfüllt somit den Form- bzw. den Kraftschluß und führt insgesamt zu einer Egalisierung der Oberfläche. Gleichzeitig wird durch eine derartige Kaschierung bzw. Abdeckung das Eindringen von Schlagregen in die Dämmstoffschicht verringert, wodurch unerwünschte Zusatzbelastungen in den äußeren Zonen der Dämmstoffschicht verhindert werden können. Diese zusätzlichen Zugbelastungen können in Verbindung mit Windsog zu einer Verformung der Dämmstoffplatten führen, so daß diese aus den zumeist randlich gesetzten Dämmstoffhaltern herausrutschen.

Als Alternative zu den Dämmstoffplatten aus Glaswolle sind Dämmstoffplatten aus Steinwolle mit Rohdichten von ca. 28 bis 55 kg/m³ bekannt. Diese Dämmstoffplatten aus anorganischen Bestandteilen bestehen aus Einzelfasern und nichtfaserigen Teilen, wobei letztere einen Anteil an der gesamten Dämmstoffmasse von bis ca. 30 Masse-% aufweisen können. Im Vergleich zu den Glasfaserdämmstoffplatten sind die Fasern bei Steinwolle Dämmstoffplatten zumeist kürzer und in sich verdrillt. Die Bindung der Einzelfasern erfolgt mit ca. 2 bis 3 Masse-% Phenol-Formaldehyd-Harnstoffharzen. Weiterhin enthalten derartige Dämmstoffplatten hydrophobierende Substanzen in einer Größenordnung von ca. 0,2 Masse-%.

Durch die bei der Herstellung von Steinwolle-Dämmplatten üblichen Verfahren sind die Einzelfasern schräg zu den großen Oberflächen orientiert, so daß diese Dämmstoffplatten in sich wesentlich steifer sind, als vergleichbare Glaswolle-Dämmstoffplatten. Die Querzugfestigkeit kann mit größer gleich 1 kN/m² so hoch sein, daß die Anforderungen des Anwendungstyps WV n. DIN 18165-1 für Dämmstoffe für Vorsatzschalen erfüllt werden. Da die Dämmstoffplatten im allgemeinen fugendicht, d.h. formschlüssig im Verband verlegt werden sollen, ergeben in sich steife Dämmstoffplatten von vornherein eine glatte, in sich stabile Dämmstoffschicht. Diese Feststellung gilt selbst nach einiger Zeit der Bewitterung und dementsprechender Lockerung des Gefüges in einer flachen Oberflächenzone bzw. bei Windsogbeanspruchung in Kombination mit massiver Schlagregenbelastung.

Aus den voranstehend genannten Gründen kann bei Dämmstoffplatten aus Steinfasern daher in der Regel auch auf eine zusätzliche Stabilisierung bzw. einen zusätzlichen Schutz durch aufgeklebte Vliese oder Gewebe verzichtet werden, zumal diese Vliese oder Gewebe bei der wesentlich höheren thermischen Beanspruchung während der Herstellung derartiger Dämmstoffplatten ohnehin erheblich an Festigkeit verlieren würden.

Dämmstoffplatten aus Mineralfasern werden üblicherweise in Abmessungen von ca. 1 bis 1,25 m Länge, 0,5 bis 0,625 m Breite und 0,03 bis 0,14 m Dicke angeboten. Dämmdicken bis ca. 220 mm sind zur Zeit ohne weiteres herstellbar.

Die Verlegung der Dämmstoffplatten erfolgt formschlüssig im Verband, so daß die Dämmstoffplatten auf einer Fassade derart angeordnet sind, daß ihre Längsachse horizontal ausgerichtet sind. Die Dämmstoffplatten werden in der Regel von unten nach oben in übereinander angeordneten Reihen an der Fassade befestigt. Bei der Anordnung im Verband befinden sich die Fugen benachbarter Dämmstoffplatten einer Reihe daher im Bereich zwischen den Schmalseiten einer Dämmstoffplatte der darüber liegenden oder darunter liegenden Reihe Dämmstoffplatten.

Bei der Anordnung der Dämmstoffplatten auf der Gebäudefassade werden die Dämmstoffplatten mit einer Vielzahl von Dämmstoffhaltern befestigt, wobei es sich in der Praxis als üblich erwiesen hat, jede Dämmstoffplatte mit einer Vielzahl von Dämmstoffhaltern an der Gebäudefassade zu verankern. Hierbei wird insbesondere darauf geachtet, daß die Ränder der Dämmstoffplatten durch die Dämmstoffhalter niedergehalten werden. Eine Verwendung von 4 bzw. 5 oder mehr Dämmstoffhaltern pro Dämmstoffplatte ist hierbei nicht unüblich, hinsichtlich der Material- und Verarbeitungskosten aber äußerst unwirtschaftlich. Insbesondere bei windexponierten Außenwandflächen oder bei Verwendung extrem verformbarer Dämmstoffplatten werden auch noch mehr Dämmstoffhalter pro Dämmstoffplatte benötigt.

Um die Anzahl der Dämmstoffhalter und damit die Zahl der Wärmebrücken zu vermindern, ist es aus dem Stand der Technik bekannt, die Dämmstoffplatten mit dem Untergrund zu verkleben. Diese Vorgehensweise ist aber wegen der Kleberaufbereitung und der Applikation des Klebers nicht wirtschaftlich. Hinzu kommt, daß die hydrophobierten Oberflächen der Dämmstoffplatten aus Mineralfasem zuvor mit einer die Oberfläche stabilisierenden kleberaffinen Deckschicht versehen werden müssen. Der Auftrag einer derartigen Deckschicht zusammen mit einem entsprechenden Kleber führt aber zu einem hohen Gewicht, das von einer Vielzahl der Dämmstoffplatten aus Glasfasern nicht getragen werden kann, so daß die Befestigung der Dämmstoffplatten aus Glasfasern mittels Verklebung äußerst fragwürdig und in der Regel nicht geeignet ist.

Neben den voranstehenden Nachteilen sei noch der weitere Nachteil erwähnt, daß beim Rückbau derartig verarbeiteter Dämmstoffplatten die sortenreine Trennung der Baustoffe zwecks Wiederverwendung oder entsprechender Weiterverwendung als Wertstoff in der Regel ausgeschlossen ist.

Ausgehend von diesem Stand der Technik liegt der Erfindung die **Aufgabe** zugrunde, eine gattungsgemäße Wärme- und/oder Schalldämmung bzw. ein gattungsgemäßes Verfahren zur Befestigung von Dämmstoffplatten bzw. Dämmstoffplattenabschnitten auf ebenen Flächen derart weiterzuentwickeln, daß eine derartige Dämmung wirtschaftlich herstellbar ist und gleichzeitig die notwendige Verbindung zum Gebäude und die notwendige Stabilität in sich aufweist, um die Nachteile des Standes der Technik, wie sie voranstehend beschrieben sind, zu vermeiden.

Die **Lösung** dieser Aufgabenstellung sieht bei einer erfindungsgemäßen Wärme- und/oder Schalldämmung vor, daß die Dämmstoffhalter jeweils ausschließlich im Bereich einer Hälfte einer in Längs- oder Querrichtung aufgeteilten Dämmstoffplatte bzw. eines Dämmstoffplattenabschnitts angeordnet sind und daß die Dämmstoffhalter einer Dämmstoffplatte bzw. eines Dämmstoffplattenabschnitts einen gleichmäßigen Abstand zu einer Längsseite und/oder einer bzw. beiden Schmalseite der Dämmstoffplatte bzw. des Dämmstoffplattenabschnitts aufweisen.

Eine derartige Dämmung hat den Vorteil, daß die Anordnung der Dämmstoffhalter eine schnelle Montage ermöglichen und gleichzeitig zu einer sicheren Befestigung der Dämmstoffplatten führt, ohne daß hier weitere Befestigungselemente, wie beispielsweise Kleber notwendig sind, wenngleich eine Verklebung der Dämmstoffplatten auf der Fläche nicht ausgeschlossen sein muß. Die Dämmstoffhalter werden bei der erfindungsgemäßen Dämmung vornehmlich in der oberen Hälfte der Dämmstoffplatten angeordnet, so daß die Dämmstoffplatten prinzipiell auf den oberen Schmalseiten der bereits montierten Dämmstoffplatte bzw. auf einer sonstigen Auflage aufstehen und durch die in der oberen Hälfte bei lotrechter oder im wesentlichen lotrechter bzw. geneigter Fläche "hängend" befestigt sind, bzw. das gegebenenfalls auftretende Kippmoment der zu befestigenden Dämmstoffplatten aufnehmen. Der Abstand der Dämmstoffhalter von den Schmalseiten bzw. der Längsseite einer jeden Dämmstoffplatte ist hierbei im wesentlichen abhängig von deren Steifigkeit und der zu erwartenden Windsogbelastung während des Zeitraums, in dem die schützende Bekleidung noch nicht montiert ist. Nach der Montage der Bekleidung ist die Windsogbelastung der Dämmstoffplatten drastisch reduziert. Durch die Verminderung der Dämmstoffhalter und die Anordnung der Dämmstoffhalter im erfindungsgemäßen Bereich der Dämmstoffplatten ist darüber hinaus sichergestellt, daß die Dämmstoffplatten insgesamt luftdurchlässig bleiben, so daß sich keine Feuchtigkeit einlagern kann, die zu zugauslösenden Druckunterschieden zwischen den beiden großen Oberflächen der Dämmstoffplatte führen kann.

Vorzugsweise sind die Dämmstoffhalter bei an einer lotrechten oder im wesentlichen lotrecht bzw. geneigten Fläche angeordneten Dämmstoffplatten bzw. Dämmstoffplattenabschnitten im Bereich der oben liegenden Längsseiten der Dämmstoffplatten bzw. Dämmstoffplattenabschnitte angeordnet. Diese Anordnung der Dämmstoffhalter ergibt sich somit insbesondere im Fassadenbereich, da hier die überwiegenden Flächen lotrecht oder nur flach geneigt ausgerichtet sind.

Nach einem weiteren Merkmal der Erfindung ist vorgesehen, daß pro Dämmstoffplatte zwei Dämmstoffhalter vorgesehen sind, die in gleichmäßigem Abstand von den beiden Schmalseiten angeordnet sind, um eine gleichmäßige Krafteinleitung in die Dämmstoffplatte zu gewährleisten. Hat die Dämmstoffplatte allerdings eine über das normale Maß hinausgehende Länge, so kann es erforderlich sein, mehr als zwei Dämmstoffhalter pro Dämmstoffplatte zu verwenden, die aber dann wiederum lediglich im Bereich einer Hälfte der Dämmstoffplatte angeordnet sind.

Es ist nach einem weiteren Merkmal der Erfindung vorgesehen, daß die Dämmstoffplatten bzw. Dämmstoffplattenabschnitte im Verband auf der Fläche angeordnet sind, wobei die Dämmstoffhalter auf rechtwinklig zueinander ausgerichteten Linien angeordnet sind. Diese Ausgestaltung hat insbesondere den Vorteil, daß eine gleichmäßige Verteilung der Dämmstoffhalter vorgesehen ist, die bereits beim Baufortschritt eine zuverlässige Überprüfung der zutreffenden Anordnung der Dämmstoffhalter ermöglicht.

Vorzugsweise ist zwischen den Dämmstoffhalter bzw. Dämmstoffplattenabständen und den Dämmstoffhaltern ein bandförmiges Halteelement angeordnet, welches mehrere Dämmstoffhalter miteinander verbindet und auf der der Fläche abgewandten großen Oberflächen der Dämmstoffplatten bzw. Dämmstoffplattenabschnitte aufliegt. Dieses zusätzliche Halteelement dient der weitergehenden Befestigung der Dämmstoffplatten bzw. Dämmstoffplattenhalter auch in den Bereichen, in denen keine Dämmstoffhalter angeordnet sind. Hierbei hat es sich als vorteilhaft erwiesen, diese Halteelemente im Fassadenbereich lotrecht anzuordnen, so daß die Halteelemente über mehrere Reihen von Dämmstoffplatten bzw. Dämmstoffplattenabschnitte verlaufen und diese einzeln untereinander angeordneten Dämmstoffplatten bzw. Dämmstoffplattenabschnitte fixieren.

Das Halteelement ist als Band ausgebildet und besteht vorzugsweise aus Metall, Kunststoff, mit Glas- oder Kunststofffasem verstärktem Kunststoff, zugfestem Gewebe, Vlies, Folie, Gummi, Gummifäden, Kautschuk oder Kombinationen aus diesen Materialien.

Vorzugsweise sind die Halteelemente derart ausgebildet, daß sie die Fugen zwischen benachbarten Dämmstoffplatten bzw. Dämmstoffplattenabschnitte überdecken. Bei dieser Ausgestaltung dienen die Halteelemente nicht nur der Fixierung der Dämmstoffplatten bzw. Dämmstoffplattenabschnitte, sondern auch der Abdeckung der Fugen, so daß während der Bauphase ein Eindringen von Feuchtigkeit in die Fugen wesentlich verringert wird.

Das als Band ausgebildete Halteelement weist insbesondere eine Flexibilität auf, die ein Aufrollen ermöglicht, so daß ein derartiges Band in leicht handhabbarer Verpackung bereitgestellt werden kann und beispielsweise entsprechend dem Baufortschritt abgerollt und verarbeitet werden kann.

Nach einem weiteren Merkmal der Erfindung ist vorgesehen, daß die Haltelemente mehrere Markierungen aufweisen, die in gleichmäßigen Abständen zueinander angeordnet sind und die Anordnung der Dämmstoffhalter anzeigen. Die Markierungen sind als zumindest vorgestanzte Löcher ausgebildet, die vorzugsweise einen runden oder quadratischen Querschnitt aufweisen und dem Verarbeiter anzeigen, an welcher Stelle ein Dämmstoffhalter zu setzen ist. Hierdurch wird die Verarbeitung bzw. die Herstellung der erfindungsgemäßen Dämmung wesentlich vereinfacht.

Um die Fixierung des Haltelementes bei der Montage zu verbessern ist vorgesehen, daß das Haltelement in regelmäßigen Abständen angeordnete Vorsprünge aufweist, die in die Dämmstoffplatten bzw. Dämmstoffplattenabschnitte eindrückbar sind. Bei der Montage eines Halteelementes wird dieses auf die bereits auf der Fläche angeordnete Dämmstoffplatte aufgelegt und mit den Vorsprüngen in die Dämmstoffplatte eingedrückt, so daß das Halteelement relativ zur Dämmstoffplatte fixiert ist. Anschließend wird an der dafür vorgesehenen Stelle der Dämmstoffhalter in an sich bekannter Weise gesetzt, so daß der Dämmstoffhalter das Halteelement und die Dämmstoffplatte durchgreift.

Die Vorsprünge sind insbesondere durch Ausstanzungen gebildete, spitz zulaufende Zungen, die in einfacher Weise herstellbar und in die Dämmstoffplatten eindrückbar sind. Beispielsweise besteht das Halteelement aus verzinktem, mit Kunststoff beschichtetem bzw. mit Farbe lackiertem oder aus nichtrostendem austenitischen Stahl, wobei die spitz auslaufenden Zungen der Vorsprünge entweder auf der Baustelle abgebogen oder bereits entsprechend verformt sind und in die Dämmstoffplatte eindrückbar ist. Die Breite dieser Zungen beträgt zumindest etwa 10 mm. Die Länge kann zwischen ca. 20 und 100 mm betragen, wobei vorzugsweise eine Länge von 50 mm vorgesehen ist. Die Abmessungen und die Ausgestaltung der Zungen bzw. der Vorsprünge sind abhängig von der Art bzw. der Festigkeit des Materials der Dämmstoffplatten.

Eine alternative Ausgestaltung sieht vor, daß die Vorsprünge als an dem Halteelement befestigbare Winkel ausgebildet sind. Die Winkel können mit dem Halteelement verschraubt, verschweißt, verklebt, vernietet oder in anderer Weise verbunden sein. Vorzugsweise sind auch die Winkel an zumindest einem Schenkel spitz auslaufend ausgebildet, so daß ein leichtes Eindrücken der Winkel in die Dämmstoffplatte möglich ist.

Nach einem weiteren Merkmal der Erfindung ist vorgesehen, daß die Vorsprünge als durch Löcher im Halteelement drückbare, insbesondere an einem Ende einen Kopf aufweisende Stifte ausgebildet sind, die vorzugsweise aus zähhartem Kunststoff bestehen. Diese Ausgestaltung hat den Vorteil, daß die Anzahl der Vorsprünge in Abhängigkeit der notwendigen Befestigung des Halteelementes variabel ist. Darüber hinaus ist eine derartige Ausgestaltung konstruktiv einfach ausgebildet, so daß sie in kostengünstiger Weise herstellbar ist.

Vorzugsweise weisen die Stifte an ihrem freien Ende ein Gewinde auf, so daß sie mit ihrem Kopf auf einer Seite des Halteelementes aufliegen und auf der anderen Seite durch eine aufschraubbare Mutter am Halteelement fixierbar sind. Die Mutter kann darüber hinaus einen Abstandshalter aufweisen oder selbst als Abstandshalter ausgebildet sind, um den Abstand zwischen den Dämmstoffplatten bzw. Dämmstoffplattenabschnitten und der Außenbekleidung zu bestimmen. Weiterhin können mit den aufgeschraubten Muttern Profile an den Halteelementen befestigt werden, die der Befestigung von beispielsweise Geweben und/oder Geflechten dienen.

Die voranstehend bereits erwähnten Abstandshalter können aber auch als Winkel aus Metall oder Kunststoff ausgebildet und insbesondere mit dem Halteelement verklebt, vernietet, verschweißt und/oder verschraubt sein.

Die Dämmstoffhalter bestehen vorzugsweise aus einem Schaft und einem Halteteller, wobei der Schaft und der Halteteller des Dämmstoffhalters einstückig ausgebildet sein können. Alternativ hierzu kann der Halteteller eine zentrisch angeordnete Bohrung aufweisen, die vom Schaft durchgriffen ist. Auf diese Weise kann der Schaft mit verschiedenen Haltetellern, beispielsweise unterschiedlicher Größe bzw. unterschiedlicher Form kombiniert werden, um für die jeweiligen Einsatzbedingungen eingerichtet zu werden.

Der Schaft ist insbesondere dübelartig ausgebildet und weist zur Aufnahme eines Spreizelementes, insbesondere einer Schraube, eine zentrisch angeordnete Bohrung auf. Anstelle der Schraube kann selbstverständlich auch ein sich konisch erweiternder Bolzen eingesetzt werden, der den dübelartigen Schaft beim Einschlagen spreizt und in der Bohrung in der Fläche verankert.

Die Bohrung im Schaft ist mit einer Kappe, insbesondere aus dem gleichen Material wie der Schaft, vorzugsweise aus Kunststoff, abdeckbar, um beispielsweise Tauwasserbildung auf der Oberfläche des metallischen Kopfes oder das Eindringen von Putz oder anderen korrosionsfördernde Stoffe enthaltenen Materialien zu vermeiden.

Der Halteteller ist vorzugsweise mit einem Durchmesser ausgebildet, der im wesentlichen mit der Breite des Halteelementes übereinstimmt, um das Halteelement vollflächig im Bereich der Halteteller auf die Dämmstoffplatten bzw. Dämmstoffplattenabschnitte zu drücken. Es kann auch vorgesehen sein, daß der Dämmstoffhalter eine Kappe aufweist, deren Rand eine Breite hat, die das Halteelement übergreift und die unabhängig vom Halteteller am Schaft befestigbar ist. Die Kappe kann vorzugsweise einen Schaft mit einem Außengewinde aufweisen, das in ein korrospondierendes Innengewinde in einer Vertiefung des Haltetellers einschraubbar ist. Diese Vertiefung kann beispielsweise im Bereich des Haltetellers oder im Bereich des Schaftes angeordnet sein, so daß beispielsweise das Halteelement zwischen dem Halteteller und der Kappe angeordnet wird. Bei dieser Ausgestaltung ist es möglich, zuerst die Dämmstoffhalter einzubringen, bevor anschließend das Halteelement an den Dämmstoffhaltern befestigt wird. Die Kappe ist derart ausgebildet, daß das Halteelement sicher erfaßt und gehalten wird. Durch die Ausgestaltung der Kappe mit dem Außengewinde und dem korrespondierenden Innengewinde am Halteteller wird eine Verbindung geschaffen, die leicht wieder lösbar ist, so daß Verarbeitungsfehler während des Baufortschritts leicht korrigiert werden können. Die Kappe besteht ebenfalls wie ein Teil des Dämmstoffhalters vorzugsweise aus faserverstärkten Kunststoffen oder aus Kombinationen von Metalltellern mit angeformtem Kunststoffschaft, der als Dübel dient.

Weiterhin kann vorgesehen sein, daß die Kappe ebenso wie der Innenbereich der Vertiefung konzentrische Ringe aufweisen, die bei der Montage der Kappe zusammenwirken. Hierbei wird die Kappe mit samt dem anhängenden Halteelement in die Vertiefung geschlagen oder gedrückt, bis die konzentrischen Ringe ineinandergreifen und die Kappe im Bereich des Haltetellers fixieren. Diese Verbindung ist insbesondere für die Verwendung bei leichten Dämmstoffplatten bzw. Dämmstoffplattenabschnitten vorgesehen, da sie insgesamt eine sehr feste Verbindung zwischen Kappe und Halteteller ermöglicht.

Eine weitere Verbesserung der Verbindung zwischen der Kappe und dem Halteteller wird dadurch erzielt, daß ein geeigneter Kleber eingebracht ist. Dieser Kleber kann beispielsweise in leicht zerdrückbaren Behältnissen angeordnet sein, die entweder an der Kappe oder am Halteteller befestigt sind, so daß sie beim Einschlagen der Kappe einem Druck unterworfen sind, der ein Austreten des Klebers aus dem Behältnis ermöglicht. Hierdurch wird eine automatische Verklebung zielt, ohne daß der Verarbeiter den Kleber manuell auf eines der beiden Bauteile auftragen muß.

Nach einer weiteren Ausgestaltung der Erfindung ist vorgesehen, daß der Halteteller mehrere Löcher zur Aufnahme von Befestigungsstiften einer Klemmplatte aufweist, mit der das Halteelement am Halteteller befestigbar ist. Die an der Klemmplatte befestigten Befestigungsstifte werden kraftschlüssig in die Löcher eingedrückt. Durch eine versetzt angeordnete Verzahnung auf dem Halteteller und der Klemmplatte wird das Halteelement zwischen diesen beiden Teilen festgeklemmt und formschlüssig gehalten.

Nach einem weiteren Merkmal der Erfindung ist vorgesehen, daß am Halteteller ein den Rand des Haltetellers federnd umgreifender Klemmteller angeordnet ist, wobei das Halteelement zwischen dem Klemmteller und dem Halteteller einklemmbar ist. Alternativ kann vorgesehen sein, daß der Halteteller einen konzentrischen Vorsprung aufweist, der in eine korrespondierend ausgebildete, ringförmige Nut der Klemmplatte eingreift, wobei das Halteelement zwischen dem Vorsprung und der Klemmplatte eingespannt ist. Ergänzend kann vorgesehen sein, daß der konzentrische Vorsprung ein Gewinde aufweist und daß ein korrespondierendes Gewindeteil an einer Kappe angeordnet ist, die mit dem Halteteller verschraubbar ist.

Es hat sich weiterhin als vorteilhaft erwiesen, daß das Spreizelement von einer Hülse umgeben ist, die zusammen mit dem Spreizelement in den Schaft des Dämmstoffhalters einsetzbar ist. An dieser Hülse ist vorzugsweise ein Hakenelement und/oder eine Lasche angeordnet an dem bzw. an der das Halteelement eingehakt bzw. angelascht ist. Hieraus ergibt sich eine einfache und schnelle Montage des Halteelementes an den Dämmstoffhaltern. Neben den voranstehend genannten Befestigungsmöglichkeiten kann das Halteelement auch mit der Hülse vernietbar sein.

Soweit das Halteelement Löcher aufweist und beispielsweise aus Gewebeband besteht, hat es sich als vorteilhaft erwiesen, in die Löcher Ösen aus Kunststoff oder Metall einzusetzen, die das Gewebeband gegen ein Aufreißen schützen.

Die voranstehend dargestellte Aufgabe wird hinsichtlich eines gattungsgemäßen Verfahrens dadurch gelöst, daß die Dämmstoffhalter entlang von rechtwinklig zueinander verlaufenden Linien angeordnet werden und jede Linie parallel zu einer Längs- oder Schmalseite verläuft und daß die Dämmstoffhalter ausschließlich im Bereich einer Hälfte einer in Längs- oder Querrichtung aufgeteilten Dämmstoffplatte bzw. eines Dämmstoffplattenabschnitts angeordnet werden. Nach einem weiteren Merkmal des erfindungsgemäßen Verfahrens ist vorgesehen, daß die Dämmstoffhalter einer Linie über bandförmige Halteelemente verbunden werden.

Ferner ist vorgesehen, daß die Dämmstoffplatten bzw. Dämmstoffplattenabschnitte auf der Fläche verklebt werden.

Schließlich ist vorgesehen, daß die Dämmstoffplatten bzw. Dämmstoffplattenabschnitte mit einer im Abstand angeordneten Abdeckung überdeckt werden.

Weitere Merkmale und Vorteile der Erfindung ergeben sich aus der nachfolgenden Beschreibung der zugehörigen Zeichnung, in der bevorzugte Ausführungsformen der erfindungsgemäßen Wärme- und/oder Schalldämmung bzw. deren Teile dargestellt sind. In der Zeichnung zeigen:
- Figur 1: eine erste Ausführungsform einer Dämmung;
- Figur 2: eine zweite Ausführungsform einer Dämmung und
- Figur 3: eine dritte Ausführungsform einer Dämmung.

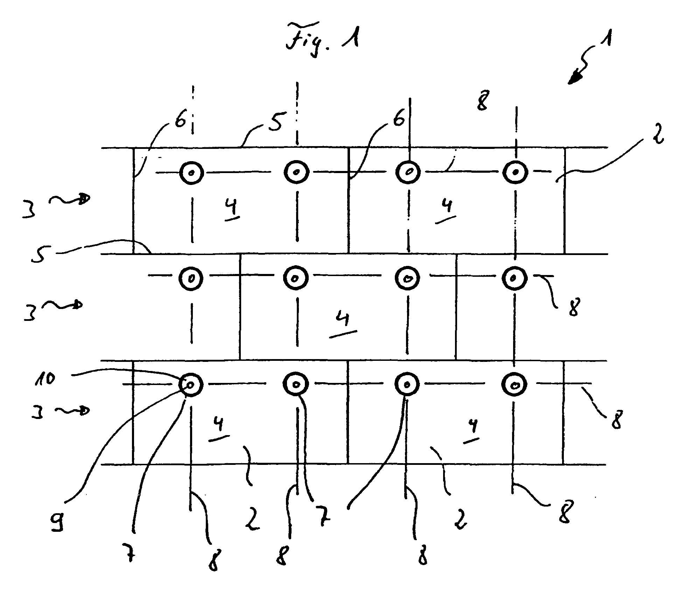

Eine in den Figuren 1 bis 3 dargestellte Wärme- und/oder Schalldämmung 1 für eine Gebäudefassade, die nicht näher dargestellt und lotrecht ausgerichtet ist, besteht aus mehreren Dämmstoffplatten 2, die in Reihen 3 nebeneinander angeordnet sind. Die Dämmstoffplatten 2 bestehen aus Fasermaterial und weisen zwei große Oberflächen 4 auf, die im Abstand zueinander und parallel verlaufend angeordnet sind. Jede Dämmstoffplatte 2 weist darüber hinaus zwei parallel zueinander verlaufende Längsseiten 5 und rechtwinklig dazu angeordnete Schmalseiten 6 auf, wobei benachbarte Dämmstoffplatten 2 mit ihren Schmalseiten 6 aneinander liegend angeordnet sind.

Die Dämmstoffplatten 2 sind im Verband verlegt, das heißt, daß die Dämmstoffplatten 2 benachbarter Reihen 3 derart angeordnet sind, daß die Schmalseiten 6 der einen Reihe 3 rechtwinklig zur Mitte der Längsseite 5 einer Dämmstoffplatte 2 der darüberliegenden Reihe 3 und darunter liegenden Reihe 3 angeordnet ist.

Die Dämmstoffplatten 2 sind mit Dämmstoffhaltern 7 an der nicht näher dargestellten Gebäudefassade befestigt, wobei die Dämmstoffhalter 7 ausschließlich im Bereich einer Hälfte der in Längsrichtung aufgeteilten Dämmstoffplatte 2 angeordnet sind. Darüber hinaus sind die Dämmstoffhalter 7 in gleichmäßigem Abstand zu einer Längsseite 5 und zu den jeweilig benachbarten Schmalseiten 6 angeordnet, so daß die Dämmstoffhalter 7 der Dämmung 1 in horizontalen und vertikalen Reihen angeordnet sind, die durch Linien 8 in Figur 1 verdeutlicht sind.

Durch diese Anordnung der Dämmstoffhalter 7 wird eine gleichmäßige Verteilung der Dämmstoffhalter 7 über die Fläche der Dämmung 1 bei gleichzeitig ausreichender Befestigung der Dämmstoffplatten 2 auf der Gebäudefassade erzielt. Insbesondere wird durch die Anordnung der Dämmstoffhalter 7 im Bereich der oberen Längsseiten 5 der Dämmstoffplatten 2 ein gegebenenfalls bei Anordnung der Dämmstoffplatten 2 auf einer lotrechten Gebäudefassade auftretendes Kippmoment der Dämmstoffplatten 2 bei der Montage der Dämmstoffplatten 2 durch die Dämmstoffhalter 7 aufgenommen, so daß ein Abstürzen der Dämmstoffplatten 2 bei der Montage der Dämmstoffplatten 2 durch die Dämmstoffhalter 7 verhindert wird. Hierbei ist zu berücksichtigen, daß die Anbringung der Dämmung 1 in der Regel von unten nach oben erfolgt, so daß die jeweils zu erstellende Reihe 3 der Dämmstoffplatten 2 auf die bereits darunterliegend angeordnete und bestehende Reihe 3 der Dämmstoffplatten 2 aufgesetzt wird.

Die Dämmstoffhalter 7 bestehen aus einem Schaft 9 und einem Halteteller 10. Der Schaft 9 ist hierbei durch eine zentrisch angeordnete Bohrung im Halteteller 10 gesteckt und dübelartig ausgebildet. In den Schaft 9 ist ein Spreizelement in Form einer nicht näher dargestellten Schraube eingesteckt, das den Schaft 9 innerhalb der Fassade derart spreizt, daß eine Verankerung des Dämmstoffhalters 7 in der Fassade zustande kommt. Der Dämmstoffhalter 7 besteht aus Kunststoff, so daß die Bildung von Wärmebrücken hierdurch im wesentlichen vermieden wird.

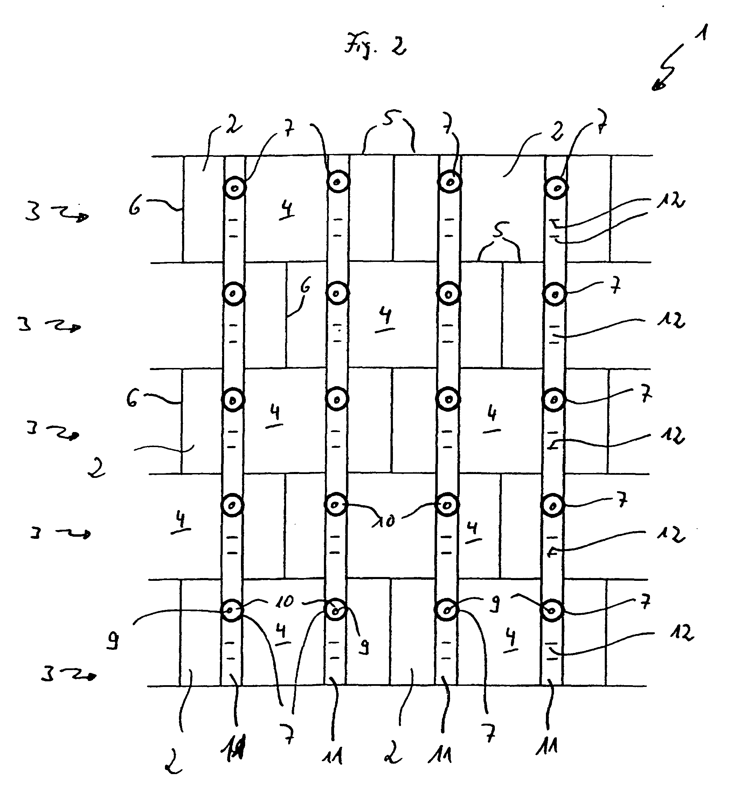

Bei der Ausführungsform in Figur 2 sind neben den Dämmstoffhaltern 7 als Befestigungselemente noch bandförmige Halteelemente 11 vorgesehen, die lotrecht angeordnet und von den Dämmstoffhaltern 7 gehalten sind. Die Halteelemente 11 bestehen aus einem Metallband, das eine bestimmte Flexibilität aufweist, um beispielsweise in gewickelter Form auf der Baustelle zur Verfügung gestellt zu werden.

Die Halteelemente 11 weisen im gleichmäßigen Abstand angeordnete vorgestanzte Löcher 12 auf, die einerseits die genaue Lage der zu setzenden Dämmstoffhalter 7 vorgeben und andererseits bei einem Metallband dafür sorgen, daß die vorgestanzten, die Löcher 12 verschließenden Metallteile von dem Halteelement 11 in Richtung auf die Dämmung 1 abgebogen werden können, so daß sie sich in den Dämmstoffplatten 2 mit entsprechenden Vorsprüngen eindrücken.

In Übereinstimmung mit dem Ausführungsbeispiel gemäß Figur 1 sind bei dem Ausführungsbeispiel gemäß Figur 2 für jede Dämmstoffplatte 2 zwei Dämmstoffhalter 7 vorgesehen.

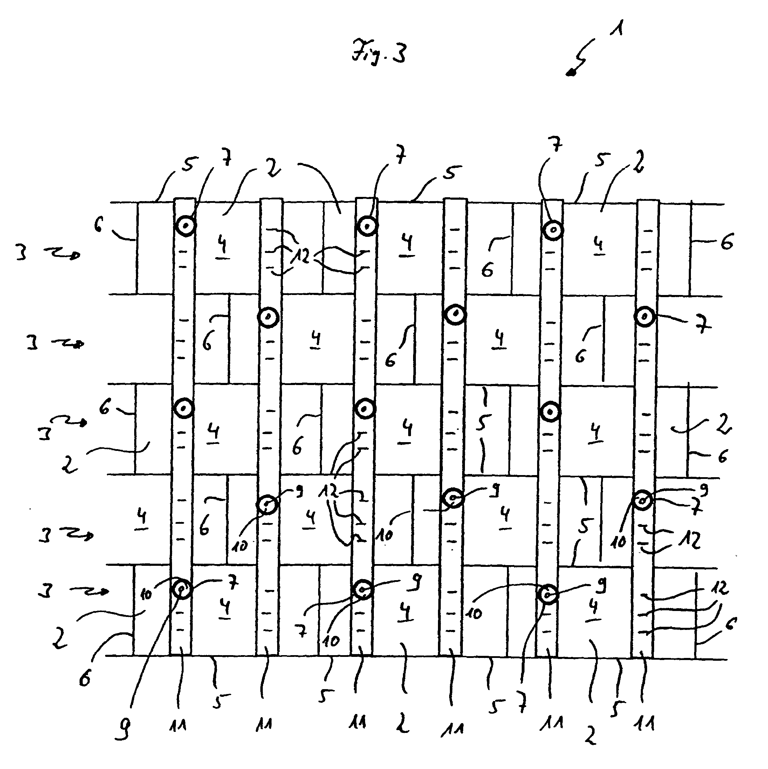

Bei dem weiteren Ausführungsbeispiel gemäß Figur 3 ist lediglich ein Dämmstoffhalter 7 pro Dämmstoffplatte 2 vorgesehen. Im übrigen entspricht diese Ausführungsform der Ausführungsform gemäß Figur 2.

## Patentansprüche

1. Wärme- und/oder Schalldämmung für eine ebene Fläche, insbesondere für eine Gebäudefassade, bestehend aus mehreren Dämmstoffplatten (2) und/oder Dämmstoffplattenabschnitten, die dann zum Einsatz kommen, wenn der verbleibende, zu dämmende Raum auf der Fläche für die Aufnahme einer gesamten Dämmstoffplatte nicht mehr geeignet ist, wobei die Dämmstoffplatten (2) und/oder die Dämmstoffplattenabschnitte über- und/oder nebeneinander auf der Fläche angeordnet und über Dämmstoffhalter (7) mit der Fläche verbunden sind,
**dadurch gekennzeichnet,**
**daß** die Dämmstoffhalter (7) jeweils ausschließlich im Bereich einer Hälfte einer in Längs- oder Querrichtung aufgeteilten Dämmstoffplatte (2) bzw. eines Dämmstoffplattenabschnitts angeordnet sind und
**daß** die Dämmstoffhalter (7) einer Dämmstoffplatte (2) bzw. eines Dämmstoffplattenabschnitts einen gleichmäßigen Abstand zu einer Längsseite (5) und/oder einer seiner bzw. beiden Schmalseite (6) der Dämmstoffplatte (2) bzw. des Dämmstoffplattenabschnitts aufweisen.

2. Dämmung nach Anspruch 1,
**dadurch gekennzeichnet,**
**daß** die Dämmstoffhalter (7) bei an einer lotrechten oder im wesentlichen lotrecht bzw geneigten Fläche angeordneten Dämmstoffplatten (2) bzw. Dämmstoffplattenabschnitten im Bereich der oben liegenden Längsseiten (5) der Dämmstoffplatten (2) bzw. Dämmstoffplattenabschnitte angeordnet sind.

3. Dämmung nach Anspruch 1,
**dadurch gekennzeichnet,**
**daß** pro Dämmstoffplatte (2) zwei Dämmstoffhalter (7) vorgesehen sind, die in gleichmäßigem Abstand von den beiden Schmalseiten (6) angeordnet sind.

4. Dämmung nach Anspruch 1,
**dadurch gekennzeichnet,**
**daß** die Dämmstoffplatten (2) bzw. Dämmstoffplattenabschnitte im Verband auf der Fläche angeordnet sind, wobei die Dämmstoffhalter (7) auf rechtwinklig zueinander ausgerichteten Linien (8) angeordnet sind.

5. Dämmung nach Anspruch 1,
**dadurch gekennzeichnet,**
**daß** zwischen den Dämmstoffplatten (2) bzw. Dämmstoffplattenabschnitten und den Dämmstoffhaltern (7) ein bandförmiges Halteelement (11) angeordnet ist, welches mehrere Dämmstoffhalter (7) miteinander verbindet und auf der der Fläche abgewandten großen Oberfläche (4) der Dämmstoffplatten bzw. Dämmstoffplattenabschnitte aufliegt.

6. Dämmung nach Anspruch 5,
**dadurch gekennzeichnet,**
**daß** das Halteelement (11) als Band ausgebildet ist und aus Metall, Kunststoff, mit Glas- oder Kunststofffasem verstärktem Kunststoff, zugfestem Gewebe, Vlies, Folie, Gummi, Gummifäden, Kautschuk oder Kombinationen aus diesen Materialien besteht.

7. Dämmung nach Anspruch 5,
**dadurch gekennzeichnet,**
**daß** die Halteelemente (11) die Fugen zwischen benachbarten Dämmstoffplatten (2) bzw. Dämmstoffplattenabschnitten überdekken.

8. Dämmung nach Anspruch 6,
**dadurch gekennzeichnet,**
**daß** das Halteelement (11) eine Flexibilität aufweist, die ein Aufrollen ermöglicht.

9. Dämmung nach Anspruch 5,
**dadurch gekennzeichnet,**
**daß** die Halteelemente (11) mehrere Markierungen aufweisen, die in gleichmäßigen Abständen zueinander angeordnet sind und die Anordnung der Dämmstoffhalter (7) anzeigen.

10. Dämmung nach Anspruch 9,
**dadurch gekennzeichnet,**
**daß** die Markierungen als zumindest vorgestanzte Löcher (12) ausgebildet sind, die vorzugsweise einen runden oder quadratischen Querschnitt aufweisen.

11. Dämmung nach Anspruch 1,
**dadurch gekennzeichnet,**
**daß** die Dämmstoffhalter (7) einen Schaft (9) und einen Halteteller (10) aufweisen.

12. Dämmung nach Anspruch 11,
**dadurch gekennzeichnet,**
**daß** der Schaft (9) und der Halteteller (10) eines Dämmstoffhalters (7) einstückig ausgebildet sind.

13. Dämmung nach Anspruch 11,
**dadurch gekennzeichnet,**
**daß** der Halteteller (10) eine zentrisch angeordnete Bohrung aufweist, die vom Schaft (9) durchgriffen ist.

14. Dämmung nach Anspruch 11,
**dadurch gekennzeichnet,**
**daß** der Schaft (9) dübelartig ausgebildet ist und zur Aufnahme eines Spreizelementes, insbesondere einer Schraube, eine zentrisch angeordnete Bohrung aufweist.

15. Dämmung nach Anspruch 14,
**dadurch gekennzeichnet,**
**daß** die Bohrung mit einer Kappe, insbesondere aus dem gleichen Material wie der Schaft (9), vorzugsweise aus Kunststoff, abdeckbar ist.

16. Dämmung nach den Ansprüchen 5 und 11,
**dadurch gekennzeichnet,**
**daß** der Halteteller (10) einen Durchmesser aufweist, der im wesentlichen mit der Breite des Halteelements (11) übereinstimmt.

17. Dämmung nach den Ansprüchen 4 und 5
**dadurch gekennzeichnet,**
**daß** der Dämmstoffhalter (7) eine Kappe aufweist, deren Rand eine Breite hat, die das Halteelement (11) übergreift.

18. Dämmung nach Anspruch 17,
**dadurch gekennzeichnet,**
**daß** die Kappe einen Schaft mit einem Außengewinde aufweist, das in ein korrespondierendes Innengewinde in einer Vertiefung des Haltetellers (10) einschraubbar ist.

19. Dämmung nach Anspruch 18,
**dadurch gekennzeichnet,**
**daß** die Kappe und/oder die Vertiefung konzentrische Ringe aufweisen.

20. Dämmung nach Anspruch 18,
**dadurch gekennzeichnet,**
**daß** die Kappe in die Vertiefung eindrück- bzw. einschlagbar und fixierbar ist.

21. Dämmung nach Anspruch 18,
**dadurch gekennzeichnet,**
**daß** in der Vertiefung ein Kleber zur Befestigung der Kappe angeordnet ist.

22. Dämmung nach Anspruch 11,
**dadurch gekennzeichnet,**
**daß** der Halteteller (10) mehrere Löcher zur Aufnahme von Befestigungsstiften einer Klemmplatte aufweist, mit der das Halteelement (11) am Halteteller (10) befestigbar ist.

23. Dämmung nach Anspruch 11,
**dadurch gekennzeichnet,**
**daß** am Halteteller (10) ein den Rand des Haltetellers (10) federnd umgreifender Klemmteller angeordnet ist, wobei das Halteelement (11) zwischen dem Klemmteller und dem Halteteller (10) einklemmbar ist.

24. Dämmung nach Anspruch 22,
**dadurch gekennzeichnet,**
**daß** der Halteteller (10) einen konzentrischen Vorsprung aufweist, der in eine korrespondierende ringförmige Nut der Klemmplatte eingreift, wobei das Halteelement (11) zwischen dem Vorsprung und der Klemmplatte eingespannt ist.

25. Dämmung nach Anspruch 24,
**dadurch gekennzeichnet,**
**daß** der konzentrische Vorsprung ein Gewinde aufweist und daß ein korrespondierendes Gewindeteil an einer Kappe angeordnet ist, die mit dem Halteteller (10) verschraubbar ist.

26. Dämmung nach Anspruch 14,
**dadurch gekennzeichnet,**
**daß** das Spreizelement von einer Hülse umgeben ist, die zusammen mit dem Spreizelement in den Schaft des Dämmstoffhalters (7) einsetzbar ist.

27. Dämmung nach Anspruch 26,
**dadurch gekennzeichnet,**
**daß** an der Hülse ein Hakenelement und/oder eine Lasche angeordnet ist, an dem bzw. an der das Halteelement (11) eingehakt bzw. angelascht ist.

28. Dämmung nach Anspruch 26,
**dadurch gekennzeichnet,**
**daß** das Halteelement (11) mit der Hülse vernietbar ist.

29. Dämmung nach Anspruch 5,
**dadurch gekennzeichnet,**
**daß** das Halteelement (11) in regelmäßigen Abständen angeordnete Vorsprünge aufweist, die in die Dämmstoffplatten (2) bzw. Dämmstoffplattenabschnitte eindrückbar sind.

30. Dämmung nach Anspruch 29,
**dadurch gekennzeichnet,**
**daß** die Vorsprünge durch Ausstanzungen gebildete, spitz auslaufende Zungen sind.

31. Dämmung nach Anspruch 29,
**dadurch gekennzeichnet,**
**daß** die Vorsprünge als an dem Halteelement (11) befestigbare Winkel ausgebildet sind.

32. Dämmung nach Anspruch 29,
**dadurch gekennzeichnet,**
**daß** die Vorsprünge als durch Löcher im Haltelement (11) drückbare, insbesondere an einem Ende einen Kopf aufweisende Stifte ausgebildet sind, die vorzugsweise aus zähhartem Kunststoff bestehen.

33. Dämmung nach Anspruch 32,
**dadurch gekennzeichnet,**
**daß** die Stifte an ihrem freien Ende ein Gewinde aufweisen.

34. Dämmung nach Anspruch 33,
**dadurch gekennzeichnet,**
**daß** die durch das Halteelement (11) gesteckten Stifte mit jeweils einer Mutter am Halteelement festgesetzt sind, die insbesondere einen Abstandshalter zu einer auf den Dämmstoffplatten (2) bzw. Dämmstoffplattenabschnitten anzuordnenden Außenbekleidung bilden.

35. Dämmung nach Anspruch 34,
**dadurch gekennzeichnet,**
**daß** mit den Muttern Profile an den Halteelementen (11) befestigt sind, die der Befestigung von beispielsweise Geweben und/oder Geflechten dienen.

36. Dämmung nach Anspruch 10,
**dadurch gekennzeichnet,**
**daß** in die Löcher (12) Ösen aus Kunststoff oder Metall eingesetzt sind.

37. Dämmung nach Anspruch 5,
**dadurch gekennzeichnet,**
**daß** an den Haltelementen (11) Abstandshalter angeordnet sind, die vorzugsweise als Winkel aus Metall oder Kunststoff ausgebildet und insbesondere mit den Halteelementen (11) verklebt, vernietet, verschweißt und/oder verschraubt sind.

38. Verfahren zur Befestigung von Dämmstoffplatten (2) bzw. Dämmstoffplattenabschnitten auf ebenen Flächen, insbesondere auf Gebäudefassaden, bei dem einzelne Dämmstoffplatten (2) auf der ebenen Fläche mit Dämmstoffhaltern (7) befestigt werden, wobei die Dämmstoffplattenabschnitte dann zum Einsatz kommen, wenn der verbleibende, zu dämmende Raum auf der Fläche für die Aufnahme einer gesamten Dämmstoffplatte nicht mehr geeignet ist,
**dadurch gekennzeichnet,**
**daß** die Dämmstoffhalter (7) entlang von rechtwinklig zueinander verlaufenden Linien (8) angeordnet werden und jede Linie parallel zu einer Längs- oder Schmalseite (5, 6) verläuft und
**daß** die Dämmstoffhalter (7) ausschließlich im Bereich einer Hälfte einer in Längs- oder Querrichtung aufgeteilten Dämmstoffplatte (2) bzw. eines Dämmstoffplattenabschnitts angeordnet werden.

39. Verfahren nach Anspruch 38,
**dadurch gekennzeichnet,**
**daß** die Dämmstoffhalter (7) einer Linie (8) über bandförmige Halteelemente (11) verbunden werden.

40. Verfahren nach Anspruch 38,
**dadurch gekennzeichnet,**
**daß** die Dämmstoffplatten (2) bzw. Dämmstoffplattenabschnitte auf der Fläche verklebt werden.

41. Verfahren nach Anspruch 38,
**dadurch gekennzeichnet,**
**daß** die Dämmstoffplatten (2) bzw. Dämmstoffplattenabschnitte mit einer im Abstand angeordneten Abdeckung überdeckt werden.

## Claims

1. Heat and/or sound insulation for an even surface, in particular for the front of a building, said insulation being comprised of plural insulating panels (2) and/or insulating panel sections, the latter being used when the remaining space to be insulated on said surface is not suited any more to receive a complete insulating panel, wherein said insulating panels (2) and/or said insulating panel sections are arranged on said surface on top of each other and/or side by side and are connected to said surface through insulation holders (7),
**characterized in**
**that** said insulation holders (7) are each arranged exclusively within the region of one half of an insulating panel (2) divided up in the longitudinal or transverse directions or of an insulating panel section and that said insulation holders (7) of an insulating panel (2) or an insulating panel section have an equal distance to one longitudinal side (5) and/or to one of or both narrow sides (6) of said insulating panel (2) or said insulating panel section.

2. Insulation according to claim 1,
**characterized in**
**that** in a case where said insulating panel (2) or insulating panel section is arranged on a perpendicular or substantially perpendicular or inclined surface said insulation holders (7) are arranged within the region of the upper longitudinal sides (5) of said insulating panels (2) or insulating panel sections.

3. Insulation according to claim 1,
**characterized in**
**that** for each insulating panel (2) two insulation holders (7) are provided which are arranged at an equal distance from said two narrow sides (6).

4. Insulation according to claim 1,
**characterized in**
**that** said insulating panels (2) or insulating panel sections are arranged in a bond on said surface, wherein said insulation holders (7) are arranged on lines (8) which are oriented at right angles with respect to each other.

5. Insulation according to claim 1,
**characterized in**
**that** between said insulating panels (2) or insulating panel sections and said insulation holders (7) a band-shaped holding element (11) is arranged, which interconnects several insulation holders (7) and which rests on the major surface (4) of said insulating panels or insulating panel sections that is directed away from said surface.

6. Insulation according to claim 5,
**characterized in**
**that** said holding element (11) is formed as a band and consists of metal, plastics, glass or synthetic fiber-reinforced plastics, non-extending woven fabric, non-woven fabric, foil, rubber, rubber threads, caoutchouc or combinations of these materials.

7. Insulation according to claim 5,
**characterized in**
**that** said holding elements (11) overlap the joints between adjacent insulating panels (2) or insulating panel sections.

8. Insulation according to claim 6,
**characterized in**
**that** said holding element (11) has a flexibility that allows rolling-up.

9. Insulation according to claim 5,
**characterized in**
**that** said holding elements (11) include several markings which are equally spaced to each other and which indicate the arrangement of said insulation holders (7).

10. Insulation according to claim 9,
**characterized in**
**that** said markings are formed at least as pre-punched holes (12) which preferably have a round or square cross section.

11. Insulation according to claim 1,
**characterized in**
**that** said insulation holders (7) include a shank (9) and a holding disk (10).

12. Insulation according to claim 11,
**characterized in**
**that** said shank (9) and said holding disk (10) of an insulation holder (7) are formed as one piece.

13. Insulation according to claim 11,
**characterized in**
**that** said holding disk (10) includes a centrally arranged bore which is penetrated by said shank (9).

14. Insulation according to claim 11,
**characterized in**
**that** said shank (9) is formed dowel-like and includes a centrally arranged bore for receiving a spreader element, particularly a screw.

15. Insulation according to claim 14,
**characterized in**
**that** said bore may be covered with a cap, particularly from the same material as said shank (9) and preferably from a plastic material.

16. Insulation according to the claims 5 and 11,
**characterized in**
**that** said holding disk (10) has a diameter which substantially corresponds to the width of said holding element (11).

17. Insulation according to the claims 4 and 5,
**characterized in**
**that** said insulation holder (7) includes a cap, of which the rim has a width which spans said holding element (11).

18. Insulation according to claim 17,
**characterized in**
**that** said cap includes a shank with an external thread that can be threaded in a corresponding internal thread in a recess of said holding disk (10).

19. Insulation according to claim 18,
**characterized in**
**that** said cap and/or recess include concentric rings.

20. Insulation according to claim 18,
**characterized in**
**that** said cap may pressed or driven into said recess and fixed therein.

21. Insulation according to claim 18,
**characterized in**
**that** within said recess a bonding agent is arranged for fixing said cap.

22. Insulation according to claim 11,
**characterized in**
**that** said holding disk (10) has plural holes for receiving fixing pins of a clamping plate by which said holding element (11) may be fixed to said holding disk (10).

23. Insulation according to claim 11,
**characterized in**
**that** on said holding disk (10) there is arranged a clamping disk surrounding the rim of said holding disk (10) in a springy fashion, wherein said holding element (11) may be clamped between said clamping disk and said holding disk (10).

24. Insulation according to claim 22,
**characterized in**
**that** said holding disk (10) includes a concentric projection which engages in a corresponding annular groove of said clamping disk, wherein said holding element (11) is clamped between said projection and said clamping disk.

25. Insulation according to claim 24,
**characterized in**
**that** said concentric projection includes a thread and that a corresponding thread member is arranged on a cap that can be screwed to said holding disk (10).

26. Insulation according to claim 14,
**characterized in**
**that** said spreader element is surrounded by a sleeve which together with said spreader element is insertable in the shank of said insulation holder (7).

27. Insulation according to claim 26,
**characterized in**
**that** on said sleeve there is provided a hook element and/or a fishplate where said holding element (11) is hooked in or fish-jointed.

28. Insulation according to claim 26,
**characterized in**
**that** said holding element (11) may be riveted to said sleeve.

29. Insulation according to claim 5,
**characterized in**
**that** said holding element includes projections arranged at regular intervals, which projections may be pressed into the insulating panels (2) or insulating panel sections.

30. Insulation according to claim 29,
**characterized in**
**that** said projections are tapering tongues which are formed by punch-outs.

31. Insulation according to claim 29,
**characterized in**
**that** said projections are formed as elbows fixable to said holding element (11).

32. Insulation according to claim 29,
**characterized in**
**that** said projections are formed as pins, particularly pins having a head on one end thereof, which pins may be pressed through holes in said holding element (11) and preferably consist of a viscohard plastic material.

33. Insulation according to claim 32,
**characterized in**
**that** said pins include a thread on the free end thereof.

34. Insulation according to claim 33,
**characterized in**
**that** the pins passed through said holding element (11) are fixed to said holding element by a respective nut, forming in particular a spacer for an outer cover to be arranged on the insulating panels (2) or the insulating panel sections.

35. Insulation according to claim 34,
**characterized in**
**that** by means of said nuts profiles are fixed to said holding elements (11), which profiles serve for the fixing of e.g. woven fabrics and/or plaitings.

36. Insulation according to claim 10,
**characterized in**
**that** eyelets made of a synthetic material or of metal are inserted in said holes (12).

37. Insulation according to claim 5,
**characterized in**
**that** on said holding elements (11) spacers are arranged which are preferably formed as elbows made of metal or synthetic material and which are in particular glued, riveted, welded and/or screwed to said holding elements (11).

38. Method for the attachment of insulating panels or insulating panel sections on even surfaces, in particular on the fronts of buildings, in which method individual insulating panels (2) are fixed on said even surface by means of insulation holders (7), wherein the insulating panel sections are used when the remaining space to be insulated on said surface is not suited any more to receive a complete insulating panel,
**characterized in**
**that** said insulation holders (7) are arranged along lines (8) extending at right angles to each other and each line extending parallel to one longitudinal or one narrow side (5, 6) and
**that** said insulation holders (7) are arranged exclusively within the region of one half of an insulating panel (2) divided up in a longitudinal or in a transverse direction or of an insulating panel section.

39. Method according to claim 38,
**characterized in**
**that** said insulation holders (7) of a line (8) are interconnected through band-shaped holding elements (11).

40. Method according to claim 38,
**characterized in**
**that** said insulating panels (2) or insulating panel sections are glued to the surface.

41. Method according to claim 38,
**characterized in**
**that** said insulating panels (2) or insulating panel sections are overlapped by a cover that is arranged at a distance.

## Revendications

1. Isolation thermique et/ou acoustique pour une surface plane, en particulier pour une façade de bâtiment, constituée par plusieurs panneaux de matériau isolant (2) et/ou sections de panneaux de matériau isolant qui sont utilisées lorsque l'espace qui reste à isoler sur la surface ne convient plus au logement d'un panneau entier de matériau isolant, les panneaux de matériau isolant (2) et/ou les sections de panneaux de matériau isolant étant placés l'un(e) au-dessus et/ou l'un (e) à côté de l'autre et étant relié(e)s à la surface par des supports de matériau isolant,
**caractérisée en ce**
**que** les supports de matériau isolant (7) sont placés respectivement exclusivement dans la zone d'une moitié d'un panneau de matériau isolant (2) divisé dans le sens longitudinal ou transversal ou d'une section de panneau de matériau isolant et
**que** les supports de matériau isolant (7) d'un panneau de matériau isolant (2) ou d'une section de panneau de matériau isolant présentent un écart régulier par rapport à un côté longitudinal (5) et/ou l'un de ses ou les deux petits côtés (6) du panneau de matériau isolant (2) ou de la section de panneau de matériau isolant.

2. Isolation selon la revendication 1,
**caractérisée en ce**
**que** les supports de matériau isolant (7) sont placés, pour des panneaux de matériau isolant (2) ou des sections de panneau isolant placées sur une surface d'aplomb ou substantiellement d'aplomb ou encore inclinée, dans la zone des côtés longitudinaux situés en haut (5) des panneaux de matériau isolant (2) ou des sections de panneaux de matériau isolant.

3. Isolation selon la revendication 1,
**caractérisée en ce**
**que** deux supports de matériau isolant (7) qui sont placés à un écart régulier des deux petits côtés (6) sont prévus par panneau de matériau isolant (2).

4. Isolation selon la revendication 1,
**caractérisée en ce**
**que** les panneaux de matériau isolants (2) ou les sections de panneaux de matériau isolant sont placées en assemblage sur la surface, les supports de matériau isolant (7) étant placés sur des lignes (8) orientées à angle droit l'une par rapport à l'autre.

5. Isolation selon la revendication 1,
**caractérisée en ce**
**qu'**un élément de retenue en forme de bande (11) est placé entre les panneaux de matériau isolant (2) ou les sections de panneaux de matériau isolant et les supports de matériau isolant (7), élément de retenue qui relie plusieurs supports de matériau isolant (7) l'un à l'autre et qui repose sur la grande face supérieure (4) des panneaux de matériau isolant ou des sections de panneaux de matériau isolant qui est détournée de la surface.

6. Isolation selon la revendication 5,
**caractérisée en ce**
**que** l'élément de retenue (11) est configuré comme une bande et est en métal, en plastique, en plastique renforcé de fibres de verre ou de plastique, en textile résistant à la traction, en non-tissé, en feuille, gomme, fils de gomme, caoutchouc ou en combinaisons de ces matériaux.

7. Isolation selon la revendication 5,
**caractérisée en ce**
**que** les éléments de retenue (11) recouvrent les joints entre des panneaux de matériau isolant voisins (2) ou des sections de panneaux de matériau isolant voisines.

8. Isolation selon la revendication 6,
**caractérisée en ce**
**que** l'élément de retenue (11) présente une flexibilité qui permet un enroulement.

9. Isolation selon la revendication 5,
**caractérisée en ce**
**que** les éléments de retenue (11) présentent plusieurs marquages qui sont placés à des écarts réguliers l'un par rapport à l'autre et qui indiquent l'arrangement des supports de matériau isolant (7).

10. Isolation selon la revendication 9,
**caractérisée en ce**
**que** les marquages sont configurés comme des trous au moins pré-découpés (12) qui présentent de préférence une section ronde ou carrée.

11. Isolation selon la revendication 1,
**caractérisée en ce**
**que** les supports de matériau isolant (7) présentent une tige (9) et un plateau de maintien (10).

12. Isolation selon la revendication 11,
**caractérisée en ce**
**que** la tige (9) et le plateau de maintien (10) d'un support de matériau isolant (7) sont configurés en une pièce.

13. Isolation selon la revendication 11,
**caractérisée en ce**
**que** le plateau de maintien (10) présente une forure placée centrée qui est traversée par la tige (9).

14. Isolation selon la revendication 11,
**caractérisée en ce**
**que** la tige (9) est configurée de type douille et présente une forure placée centrée pour recevoir un élément écarteur, en particulier une vis.

15. Isolation selon la revendication 14,
**caractérisée en ce**
**que** la forure peut être recouverte avec un capuchon, en particulier fait dans le même matériau que la tige (9), de préférence en matière plastique.

16. Isolation selon les revendications 5 et 11,
**caractérisée en ce**
**que** le plateau de maintien (10) présente un diamètre qui coïncide substantielelment avec la largeur de l'élément de maintien (11).

17. Isolation selon les revendications 4 et 5,
**caractérisée en ce**
**que** le support de matériau isolant (7) présente un capuchon dont le bord a une largeur qui recouvre l'élément de maintien (11).

18. Isolation selon la revendication 17,
**caractérisée en ce**
**que** le capuchon présente une tige avec un filet extérieur qui peut être vissé dans un filet intérieur correspondant dans un évidement du plateau de maintien (10).

19. Isolation selon la revendication 18,
**caractérisée en ce**
**que** le capuchon et/ou l'évidement présente des anneaux concentriques.

20. Isolation selon la revendication 18,
**caractérisée en ce**
**que** le capuchon peut être pressé ou enfoncé dans l'évidement et fixé.

21. Isolation selon la revendication 18,
**caractérisée en ce**
**qu'**une colle est placée dans l'évidement pour fixer le capuchon.

22. Isolation selon la revendication 11,
**caractérisée en ce**
**que** le plateau de maintien (10) présente plusieurs trous pour le logement de chevilles de fixation d'une plaque de serrage avec laquelle l'élément de maintien (11) peut être fixé au plateau de maintien (10).

23. Isolation selon la revendication 11,
**caractérisée en ce**
**qu'**un plateau de serrage qui entoure de manière élastique le bord du plateau de maintien (10) est placé sur le plateau de maintien (10), l'élément de maintien (11) pouvant être serré entre le plateau de serrage et le plateau de maintien (10).

24. Isolation selon la revendication 22,
**caractérisée en ce**
**que** le plateau de maintien (10) présente une saillie concentrique qui s'engrène dans une rainure annulaire correspondante de la plaque de serrage, l'élément de maintien (11) étant serré entre la saillie et la plaque de serrage.

25. Isolation selon la revendication 24,
**caractérisée en ce**
**que** la saillie concentrique présente un filet et qu'une partie de filet correspondante est placée sur un capuchon qui peut être vissé au plateau de maintien (10).

26. Isolation selon la revendication 14,
**caractérisée en ce**
**que** l'élément écarteur est entouré par un manchon qui peut être mis en place avec l'élément écarteur dans la tige du support de matériau isolant (7).

27. Isolation selon la revendication 26,
**caractérisée en ce**
**qu'**un élément à crochet et/ou une attache est placée sur le manchon, élément ou attache sur laquelle l'élément de maintien (11) est accroché ou attaché.

28. Isolation selon la revendication 26,
**caractérisée en ce**
**que** l'élément de maintien (11) peut être riveté au manchon.

29. Isolation selon la revendication 5,
**caractérisée en ce**
**que** l'élément de maintien (11) présente des saillies placées à des écarts réguliers qui peuvent être enfoncées dans les panneaux de matériau isolant (2) ou les sections de panneaux de matériau isolant.

30. Isolation selon la revendication 29,
**caractérisée en ce**
**que** les saillies sont des languettes effilées formées par des découpes.

31. Isolation selon la revendication 29,
**caractérisée en ce**
**que** les saillies sont configurées comme des cornières pouvant être fixées à l'élément de maintien (11).

32. Isolation selon la revendication 29,
**caractérisée en ce**
**que** les saillies sont configurées comme des chevilles présentant en particulier une tête à une extrémité qui peuvent être poussées à travers des trous dans l'élément de maintien (11), chevilles qui sont de préférence en un plastique dur tenace.

33. Isolation selon la revendication 32,
**caractérisée en ce**
**que** les chevilles présentent un filet à leur extrémité libre.

34. Isolation selon la revendication 33,
**caractérisée en ce**
**que** les chevilles enfoncées à travers l'élément de maintien (11) sont bloquées avec respectivement un écrou sur l'élément de maintien qui forment en particulier un écarteur par rapport à un revêtement extérieur qui doit être placé sur les panneaux de matériau isolant (2) ou les sections de panneaux de matériau isolant.

35. Isolation selon la revendication 34,
**caractérisée en ce**
**que** des profilés qui servent à la fixation par exemple de tissus et/ou de tressages sont fixés aux éléments de maintien (11) avec les écrous.

36. Isolation selon la revendication 10,
**caractérisée en ce**
**que** des oeillets en matière plastique ou en métal sont mis en place dans les trous (12).

37. Isolation selon la revendication 5,
**caractérisée en ce**
**que** des écarteurs sont placés sur les éléments de maintien (11), écarteurs qui sont de préférence configurés comme des cornières en métal ou en matière plastique et qui sont en particulier collés, rivetés, soudés et/ou vissés aux éléments de maintien (11).

38. Procédé pour la fixation de panneaux de matériau isolant (2) ou de sections de panneaux de matériau isolant sur des surfaces planes, en particulier sur des façades de bâtiments, pour lequel des panneaux individuels de matériau isolant (2) sont fixés sur la surface plane avec des supports de matériau isolant (7), les sections de panneaux de matériau isolant étant utilisées lorsque l'espace qui reste à isoler sur la surface ne convient plus au logement d'un panneau entier de matériau isolant,
**caractérisé en ce**
**que** les supports de matériau isolant (7) sont placés le long de lignes (8) à angle droit l'une par rapport à l'autre et chaque ligne est située parallèlement à un côté longitudinal ou à un petit côté (5, 6) et
**que** les supports de matériau isolant (7) sont placés uniquement dans la zone d'une moitié d'un panneau de matériau isolant (2) divisé dans le sens longitudinal ou transversal ou d'une section de panneau de matériau isolant.

39. Procédé selon la revendication 38,
**caractérisé en ce**
**que** les supports de matériau isolant (7) d'une ligne (8) sont reliés par des éléments de maintien en forme de bande (11).

40. Procédé selon la revendication 38,
**caractérisé en ce**
**que** les panneaux de matériau isolant (2) ou les sections de panneaux de matériau isolant sont collées sur la surface.

41. Procédé selon la revendication 38,
**caractérisé en ce**
**que** les panneaux de matériau isolant (2) ou les sections de panneaux de matériau isolant sont recouvertes avec un recouvrement placé espacé.
